# EUROPEAN PATENT APPLICATION

(11) **EP 0 817 456 A2**
(43) Date of publication of application: **07.01.1998**
(21) Application number: 97304700.4
(22) Date of filing: 30.06.1997
(51) Int. Cl.: H04M 3/56

(54) **Multiparty simultaneous communication system**

(30) Priority: 05.07.1996 JP 194116/96
(71) Applicant: KOKUSAI DENSHIN DENWA CO., LTD, Shinjuku-ku Tokyo (JP)
(72) Inventor: Yamada, Hideaki, Itabashi-ku, Tokyo (JP); Nakao, Kouji, Sayama-shi, Saitama (JP); Wakahara, Yasushi, Ohmiya-shi, Saitama (JP)
(74) Representative: Skone James, Robert Edmund

(57) **Abstract**

A multiparty simultaneous communication system includes at least one first user premises equipment (A) and second and third user premises equipments (B,C), the first user premises equipment being connectable with the second and third user premises equipments via a network (N), to which the first user premises equipment is subscribed. The system includes a first simultaneous communication device (M_{A}), mounted in the first user premises equipment (A), capable of simultaneously communicating two kinds of information via a single communication line (L_{A}), an equipment for simultaneous communication service (5) located inside or outside of the network, and at least one second simultaneous communication device (S₁), mounted in the equipment for simultaneous communication service, capable of simultaneously communicating two kinds of information via a single communication line. The equipment for simultaneous communication service (S) controls the at least one second simultaneous communication device (5₁ connected to the first simultaneous communication device (M_{A}) via a single communication line (L_{A}) so that the first user premises equipment (A) can simultaneously communicate with the second and third user premises equipments (B,C).

## Description

### FIELD OF THE INVENTION

The present invention relates to a simultaneous communication system capable of simultaneously communicating with a plurality of parties via a single communication line.

### DESCRIPTION OF THE RELATED ART

Recently, various information terminals such as personal computers provided with communication functions have greatly spread. With spread of these intelligent terminals, data communications established by accessing public networks such as telephone networks or ISDN networks from users via modems have been popularized. Also, with increase of available communication services such as conventional telephone services, facsimile services and data communication services, many users have requested simultaneous usage of the various communication services.

However, since most of end users, particularly users in home are subscribers each possessing a single telephone line, when the data communication occupies for a longer period of time, it is very difficult to utilize the conventional telephone services such as voice transmission telephone or facsimile. There are some ways for solving this problem. First is to use two subscriber telephone lines by installing an additional line, second is to use a mobile phone line such as a PHS (Personal Handyphone System) phone or a portable phone in addition to the subscriber telephone line, and third is to individually use a plurality of communication channels (B channels) of the ISDN line.

To provide two subscriber lines requires double line subscriptions as well as double basic rates, and also proper selection of two telephone numbers. Thus, the expense charged to the user will increase and easy handling of the two telephones will not be expected.

The additional use of the PHS phone or the portable phone invites higher telephone rate with respect to that of the subscriber telephone. Therefore, it is not so advantageous to use the PHS phone or the portable phone for the sake of only obtaining an another telephone line in addition to the data communication line.

The use of the ISDN line also invites not only higher basic telephone rate but also increased initial cost charged to the user because it needs a special modem for connecting the terminal with the ISDN line. When all the B channels are utilized to one telephone line as for 128 kbps (ISDN 2B) bulk data transfer, the similar problems as these in the use of one telephone line will occur even if the ISDN line is used.

### SUMMARY OF THE INVENTION

It is therefore an object of the present invention to provide a multiparty simultaneous communication system capable of simultaneously communicating with a plurality of parties via a single communication line by using a cheap device, only.

According to the present invention, a multiparty simultaneous communication system includes at least one first user premises equipment and second and third user premises equipments, the first user premises equipment being connectable with the second and third user premises equipments via a network to which the first user premises equipment is subscribed. Particularly, the system includes a first simultaneous communication device, mounted in the first user premises equipment, capable of simultaneously communicating two kinds of information via a single communication line, an equipment for simultaneous communication service located inside or outside of the network, and at least one second simultaneous communication device, mounted in the equipment for simultaneous communication service, capable of simultaneously communicating two kinds of information via a single communication line. The equipment for simultaneous communication service controls the at least one second simultaneous communication device connected to the first simultaneous communication device via a single communication line so that the first user premises equipment can simultaneously communicate with the second and third user premises equipments.

It is to be noted that, in this specification, two kinds of information may include two different kinds of voice information, two different kinds of data information or voice information and data information.

By executing simultaneous communication between the first simultaneous communication device mounted in the first user premises equipment and the second simultaneous communication device mounted in the equipment for simultaneous communication service located inside or outside of the network, the first user premises equipment can simultaneously communicate with the second and third user premises equipments. The multiparty simultaneous communication service can be achieved only by preparing, in the user premises equipment who intends to execute simultaneous communication, the simultaneous communication device. No modification nor addition of the user premises equipment and the line subscription except for preparing the above-mentioned simultaneous communication device is necessary. Accordingly, two-site simultaneous communication can be realized by a single communication line with a low initial cost.

It is preferred that the system includes a plurality of the first user premises equipments, and that the equipment for simultaneous communication service has a plurality of the second simultaneous communication devices corresponding to the respective first user premises equipments. However, it is not always necessary that the equipment for simultaneous communication service has the same number of the second simultaneous communication devices as that of the first user premises equipments. For example, only one second simultaneous communication device may be provided with respect to ten first user premises equipments.

It is also preferred that the system has a function of registration for call forwarding so that all connection requirements directed to the first user premises equipment are transferred to the equipment for simultaneous communication service.

Preferably, the equipment for simultaneous communication service has a function for identifying the first user premises equipment by utilizing a dial-in function of the network, a call forwarding line identification of a call forwarding function, or a call control information in the network, when the first user premises equipment receives the connection requirement. Particularly, if the equipment for simultaneous communication service is located inside the network, the call control information in the network can directly use without using the call forwarding service causing its structure to become simple.

It is preferred that the first and second simultaneous communication devices are devices provided with a multiplexing function. In this specification, a multiplexing function includes a function for multiplexing voice information and data information (SVD function: Simultaneous Voice and Data function), a function for multiplexing two different voice information and a function for multiplexing two different data information.

It is also preferred that each of the first and second simultaneous communication devices includes a modem provided with no multiplexing function, and a data communication device connected to the modem, having a protocol capable of simultaneously operating different communication applications.

Preferably, the first and second simultaneous communication devices are connected with each other via a single analog telephone line, an ISDN line or a mobile phone line.

Further objects and advantages of the present invention will be apparent from the following description of the preferred embodiments of the invention as illustrated in the accompanying drawings.

### BRIEF DESCRIPTION OF THE DRAWINGS

Fig. 1 shows a block diagram schematically illustrating a system configuration of a preferred embodiment according to the present invention;
Fig. 2 shows a block diagram illustrating a configuration example of an equipment for simultaneous communication service S shown in Fig. 1;
Fig. 3 shows a block diagram schematically illustrating a system configuration of another embodiment according to the present invention;
Fig. 4 illustrates an operation of a simultaneous communication of a calling user premises equipment A with both user premises equipments B and C;
Fig. 5 shows an access sequence diagram of the operation of Fig. 4;
Fig. 6 illustrates an operation under a different network configuration from that of Fig. 4;
Fig. 7 illustrates an operation of a simultaneous communication of the calling user premises equipment A with the user premises equipment B and of the called user premises equipment A with the user premises equipment C;
Fig. 8 shows an access sequence diagram of the operation of Fig. 7;
Fig. 9 illustrates an operation of a simultaneous communication of the called user premises equipment A with the user premises equipment B and of the calling user premises equipment A with the user premises equipment C;
Fig. 10 shows an access sequence diagram of the operation of Fig. 9;
Fig. 11 illustrates an operation of a simultaneous communication of the called user premises equipment A with both the user premises equipments B and C; and
Fig. 12 shows an access sequence diagram of the operation of Fig. 11.

### DESCRIPTION OF THE PREFERRED EMBODIMENTS

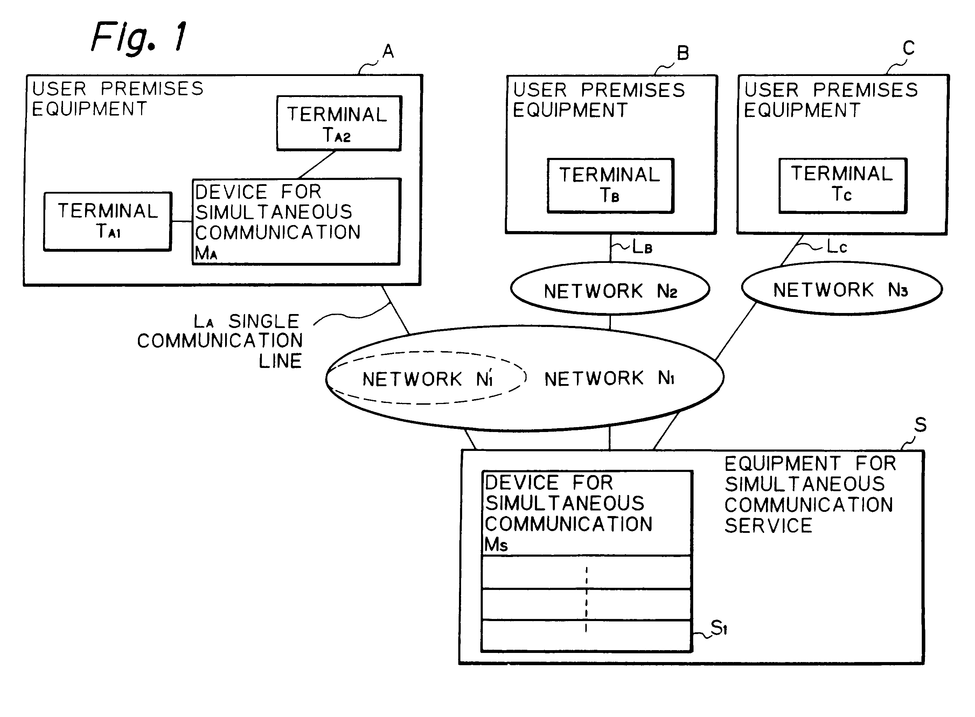

In Fig. 1 which schematically illustrating a system configuration of a preferred embodiment according to the present invention, reference A denotes a user premises equipment for a user a who intends to execute a simultaneous communication, B and C denote user premises equipments for different users b and c who execute the simultaneous communication with the equipment A, respectively. The user premises equipment A is provided with a typical telephone terminal T_{A1} such as a voice transmission telephone or a facsimile, a data communication terminal T_{A2} such as a personal computer, and a user side device for the simultaneous communication M_{A} such as a device with a multiplexing function allowing the simultaneous communication, for example, a DSVD (Digital Simultaneous Voice and Data) modem, or a device with no multiplexing function but allowing the simultaneous communication similarly to the DSVD modem. These terminals T_{A1} and T_{A2} can be connected via the user side device for the simultaneous communication M_{A} to a network N₁ such as a public telephone network by means of a single communication line L_{A}.

The DSVD modem which has recently received attention allows the same site simultaneous communication of two information such as coded voice information and/or data communication information by using a single line.

This modem may be used in several end user applications of for example personal conferencing wherein both end users share the same image data on the personal computer display with simultaneous voice conversation, of home shopping wherein data communication with respect to merchandise information are carried out between a user and an operator with simultaneous voice conversation, and of multi-player computer game wherein a plurality of users simultaneously play the game with shouting to each other.

The communication rate of the existing DSVD modem is for example 28.8 kbps. During the simultaneous voice and data communication, the voice communication will occupy about 9.6 kbps at the maximum, and the remaining will be used for the data communication. Three communication modes, namely a communication mode for voice only, a communication mode for data only and a simultaneous communication mode for both voice and data are available. It is possible to shift from any communication mode to another communication mode during operation. The DSVD modem has an upward compatibility function with the conventional modem and also can communicate with the conventional modem which does not have a multiplexing function.

The user premises equipment B is provided with a data communication terminal T_{B} such as a personal computer. This terminal T_{B} can be connected via a conventional modem (not shown) to a network N₂ such as a public telephone network by means of a single communication line L_{B}. The user premises equipment C is provided with a general telephone terminal T_{C} such as a voice transmission telephone or a facsimile. This terminal T_{C} can be connected to a network N₃ such as a public telephone network by means of a single communication line L_{C}. Both the terminals T_{B} and T_{C} may be conventional telephone terminals connected with respective subscriber lines. Each of the terminals may be either a public telephone terminal or a mobile terminal.

An equipment for the simultaneous communication service S is connected to the network N₁ as for a service node of the network N₁ (a facility for the simultaneous communication service, which is treated as a terminal from the network). In the equipment S, a plurality of network provider devices for the simultaneous communication M_{S} facing via the connected lines with the respective user side devices for the simultaneous communication M_{A} in the user premises equipment A with which the simultaneous communication is to be carried out. These network provider devices for the simultaneous communication M_{S} may be provided with a multiplexing function allowing the simultaneous communication or with no multiplexing function but allowing the simultaneous communication similarly to the former.

The equipment for the simultaneous communication service S also has a plurality of processing parts for monitoring the communication state of the user premises equipment A and for connecting a transmitted call directed to the equipment A from the equipment B or C to the equipment A in accordance with information contained in the transmitted call.

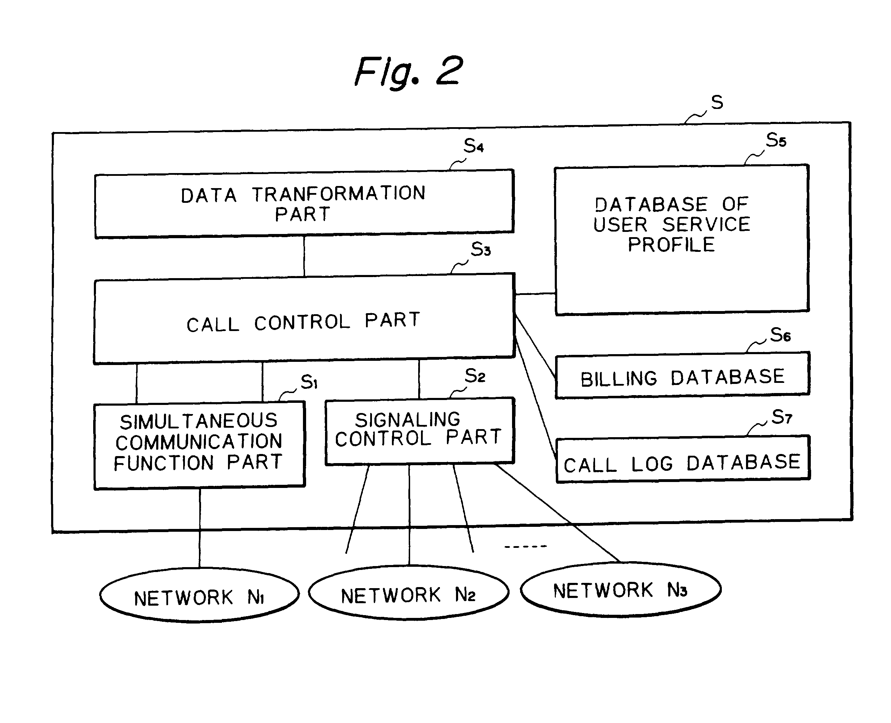

Fig. 2 illustrates a configuration example of this simultaneous communication service equipment S. In the figure, reference S₁ denotes a simultaneous communication function part which includes a plurality of the network provider devices for the simultaneous communication M_{S}, S₂ denotes a signaling control part corresponding to the respective networks, S₃ denotes a call control part, S₄ denotes a data transformation part for transforming information between the information with adequate format of the network to be connected (analog voice information for example) and the IP datagram packet, S₅ denotes a database of user service profile for storing, for example, user IDs, user authentication information, dial-in information and user's information of connection control, S₆ denotes a billing database, and S₇ denotes a call log database, respectively.

The simultaneous communication service equipment S is located external to the network N₁ as for a service node of this network N₁ in this embodiment. However, the equipment S may be located inside the network N₁ as a network provider equipment. If the equipment S is constructed as a service node type equipment, no modification for the existing telephone network is necessary to achieve the facility of the equipment S. Whereas, if the equipment S is to be constructed inside the network N₁ as the network provider equipment, the facility of the equipment S can be achieved by modifying the SW of the network provider. In fact, the facility of this equipment S can be realized by defining it as a new service capable of being carried out by the service control function in an IN (Intelligent Network) system.

In the above-mentioned embodiment, the simultaneous communication service equipment S is connected to the networks N₂ and N₃ via the network N₁. However, if the network N₁ is not existed, the equipment S may be connected to a network N₁' shown by a broken line in Fig. 1 with which the equipment A is subscripted or may be directly connected to the networks N₂ and N₃. Furthermore, in a modification, a part of or all of the networks N₁, N₂ and N₃ may be the same network.

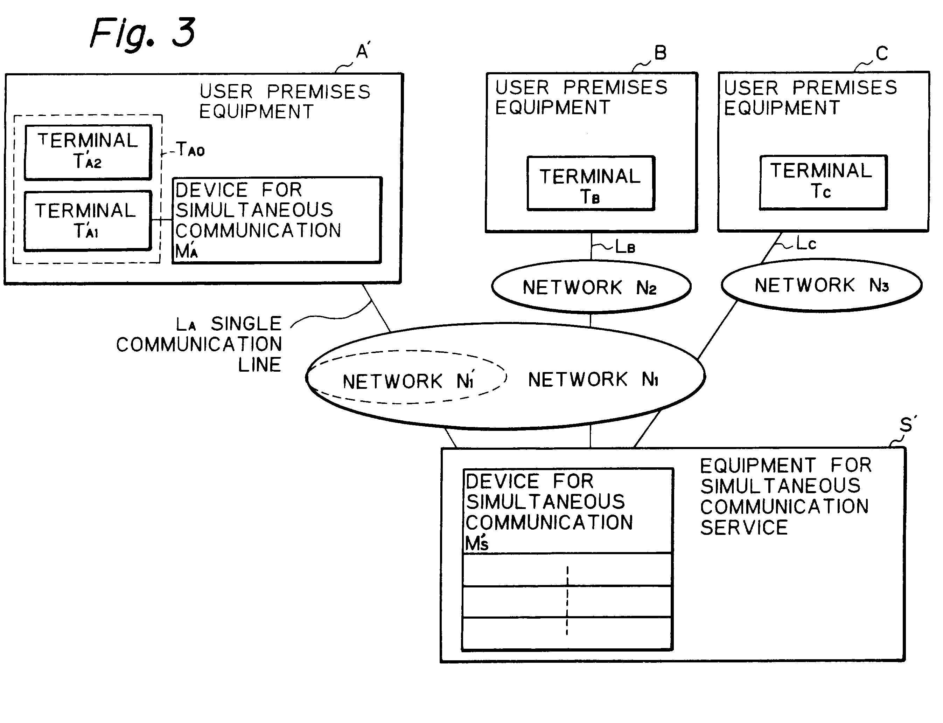

In Fig. 3 which schematically illustrating a system configuration of another embodiment according to the present invention, reference A' denotes a user premises equipment for a user a' who intends to execute a simultaneous communication, B and C denote user premises equipments for different users b and c who execute the simultaneous communication with the equipment A', respectively. The user premises equipment A' is provided with a data communication device T_{A0} having a communication protocol which can simultaneously operate different communication applications and a typical modem M_{A}' with no multiplexing function. The data communication device T_{A0} is constituted by for example a personal computer which realizes data terminals T_{A1}' and T_{A2}' by means of software. These data terminals T_{A1}' and T_{A2}' can be connected via the modem M_{A}' to a network N₁ such as a public telephone network by means of a single communication line L_{A}.

The user premises equipment B is provided with a data communication terminal T_{B} such as a personal computer. This terminal T_{B} can be connected via a conventional modem (not shown) to a network N₂ such as a public telephone network by means of a single communication line L_{B}. The user premises equipment C is provided with a general telephone terminal T_{C} such as a voice transmission telephone or a facsimile. This terminal T_{C} can be connected to a network N₃ such as a public telephone network by means of a single communication line L_{C}. Both the terminals T_{B} and T_{C} may be conventional telephone terminals connected with respective subscriber lines. Each of the terminals may be either a public telephone terminal or a mobile terminal.

An equipment for the simultaneous communication service S' is connected to the network N₁ as for a service node of the network N₁ (a facility for the simultaneous communication service, which is treated as a terminal from the network). In the equipment S', a plurality of network provider modems M_{S}' facing via the connected lines with the respective user side modems M_{A}' in the user premises equipment A' with which the simultaneous communication is to be carried out are provided. These network provider modems M_{S}' are typical modems with no multiplexing function.

The simultaneous communication service equipment S' also has a data communication device having a communication protocol which can simultaneously operate different communication applications, a plurality of processing parts for monitoring the communication state of the user premises equipment A' and for connecting a transmitted call directed to the equipment A' from the equipment B or C to the equipment A' in accordance with information contained in the transmitted call.

Hereinafter, various operations in the aforementioned embodiments will be described in detail. The following description of the operation is carried out with respect to the embodiment of Fig. 1. However, it will be understood that the similar operation will occur in the embodiment of Fig. 3 except for an operation between the equipment A' and the simultaneous communication service equipment S'.

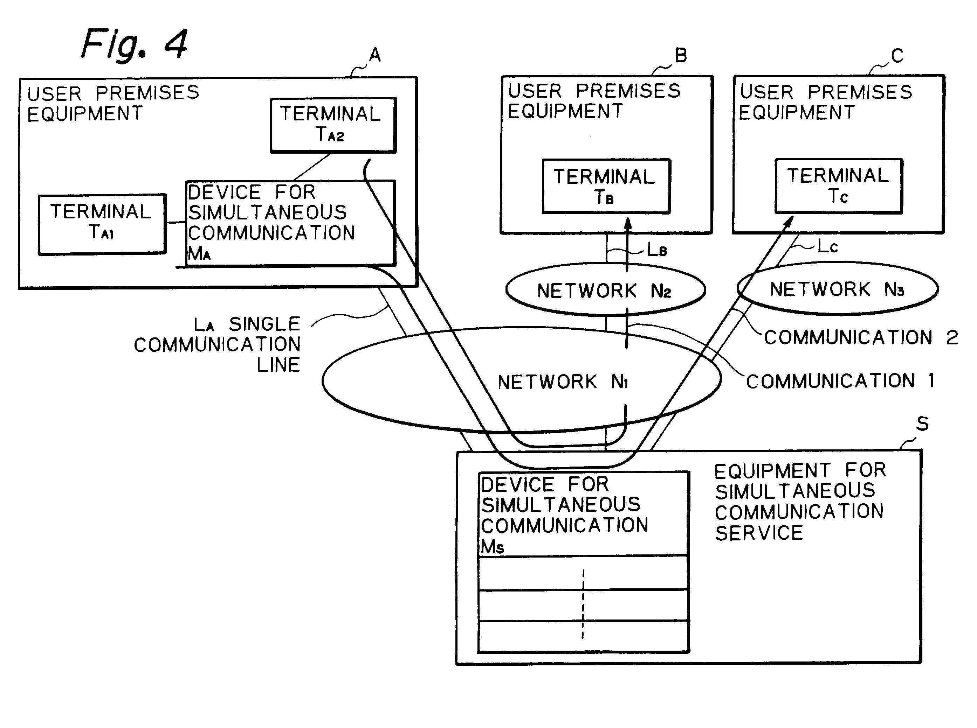

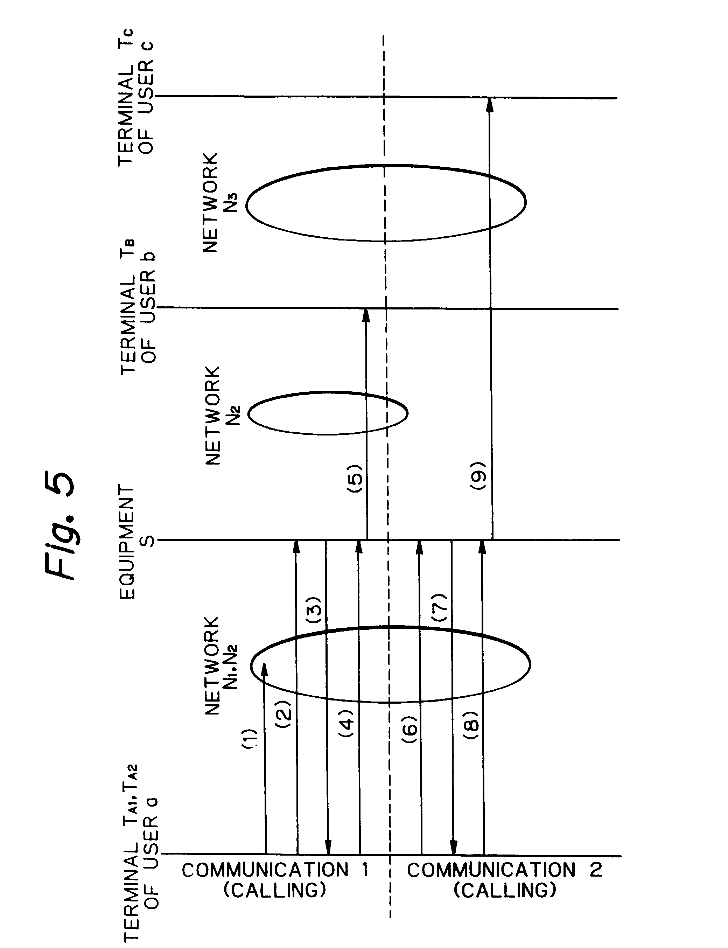

Fig. 4 illustrates an operation of a simultaneous communication of the user premises equipment A with both the user premises equipments B and C, and Fig. 5 shows an access sequence diagram of the operation of Fig. 4. In this case, calls are originated from the equipment A.

First, the communication 1 between the calling user premises equipment A and the equipment B is described. This communication 1 is executed between the calling data communication terminal T_{A2} for personal computer communication in the user premises equipment A and the called data communication terminal T_{B} for personal computer communication in the user premises equipment B, by using the user side device for the simultaneous communication M_{A} and the network provider device for the simultaneous communication M_{S} in the equipment S.
(1) As shown in Fig. 5, the user premises equipment A of the user a registers so that all possible calls toward itself from the equipment B or C or from another user are forwarded to the simultaneous communication service equipment S by utilizing the call forwarding service in the network N₁ or in a private virtual network service. This registration for call forwarding may be automatically carried out by a part of software for executing call origination process for example, or may be carried out by another way. Also, cancellation for the call forwarding may be automatically carried out by a part of software for executing communication termination process when all the communications of the user premises equipment A via the simultaneous communication service equipment S are to be terminated, or may be carried out by another way. For example, the registration for call forwarding / cancellation for call forwarding may be carried out by means of the simultaneous communication service equipment S instead of the user after the user premises equipment A accesses this equipment S.
(2) The user premises equipment A of the user a originates a call which is directed for the simultaneous communication service equipment S to the network N₁, and thus the call is arrived at the equipment S.
(3) The equipment S accepts this call and then sends a request to transmit information such as identifying information of the user a, authentication information of the user a and destination information designating a party with which the user intends to communicate, to the user premises equipment A.
(4) In response to the request from the equipment S, the equipment A sends the information such as identifying information of the user a, authentication information of the user a and destination information designating a party with which the user intends to communicate, to the equipment S.
(5) The equipment S verifies the user a based upon the information obtained at the above-mentioned stage (4). If it is valid, a call to the party with which the user intends to communicate (the user premises equipment B in the network N₂ in this case ) is originated. When the equipment B is being called or when the equipment B is busy, the user premises equipment A is informed it from the equipment S by means of an announce or a tone signal. The party with which the user intends to communicate may be another network such as the internet other than the user premises equipment B in the network N₂.
   Next, the communication 2 which is carried out, under this state of (5), between the calling user premises equipment A and the equipment C is now described. This communication 2 is simultaneous communication with the communication 1 and is executed between the calling telephone or facsimile terminal T_{A1} not yet communicating disposed in the user premises equipment A and the called telephone or facsimile terminal T_{C} in the user premises equipment C, by using the user side device for the simultaneous communication M_{A} and the network provider device for the simultaneous communication M_{S} in the equipment S.
(6) The equipment A sends information indicative of another call origination to the simultaneous communication service equipment S.
(7) The equipment S sends a request to transmit destination information designating a new party with which the user a intends to communicate to the user premises equipment A when the call origination information is received from this user a.
(8) In response to the request of (7) from the equipment S, the user premises equipment A sends destination information designating a new party with which the user intends to communicate, to the equipment S.
(9) Then, the simultaneous communication service equipment S originates a call to the new party with which the user intends to communicate (the user premises equipment C in the network N₃ in this case ). When the equipment C is being called or when the equipment C is busy, the user premises equipment A is informed it from the equipment S by means of an announce or a tone signal.

The aforementioned protocol of (1)-(4) and (6)-(8) is a mere example and does not limit the present invention. To realize the present invention in fact, various modifications of the protocol may be executed and these modifications are within the scope of the present invention.

In case of the communication by means of the user side device for the simultaneous communication M_{A} and the network provider device for the simultaneous communication M_{S} provided with a multiplexing function (the embodiment of Fig. 1), to which call data packets transmitted in the communication between the user premises equipment A and the simultaneous communication service equipment S belong is checked by using their ID, and then the equipment S individually treats the packets with the different ID, respectively. Thus, calls for two different communications between the user premises equipment A and the simultaneous communication service equipment S can be simultaneously realized.

In case of the communication by means of the user side device for the simultaneous communication M_{A}' and the network provider device for the simultaneous communication M_{S}' provided with no multiplexing function (the embodiment of Fig. 3), the user premises equipment A' and the simultaneous communication service equipment S' are connected with each other by means of PPP (Point to Point Protocol), and during the communication based upon this protocol, a data communication application such as for example voice communication application and the internet is executed by another data communication device connected with the devices (modems) M_{A}' and M_{S}'. For example, in order to execute these two applications by a single data communication device such as a personal computer, two different communication port numbers are designated in a communication protocol such as TCP (Transmission Control Protocol) or UDP (User Datagram Protocol). Thus, the communication information used in the respective applications can be treated individually in the user premises equipment A and in the simultaneous communication service equipment S, and therefore two different communications can be realized.

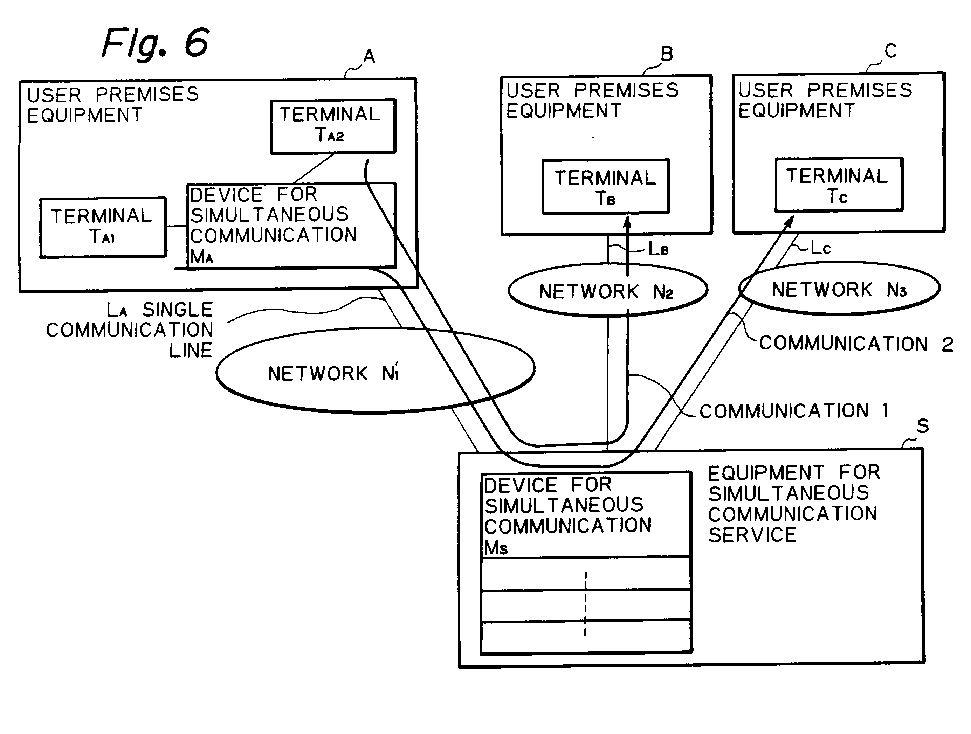

Fig. 6 illustrates an operation of a simultaneous communication of the user premises equipment A with both the user premises equipments B and C by originating calls from the equipment A. In this case, the equipment for the simultaneous communication service S is connected to a network N₁' with which the equipment A is subscripted and the equipment S is directly connected to the networks N₂ and N₃. The concrete operations in this case are the same as that in the aforementioned case of Figs. 4 and 5.

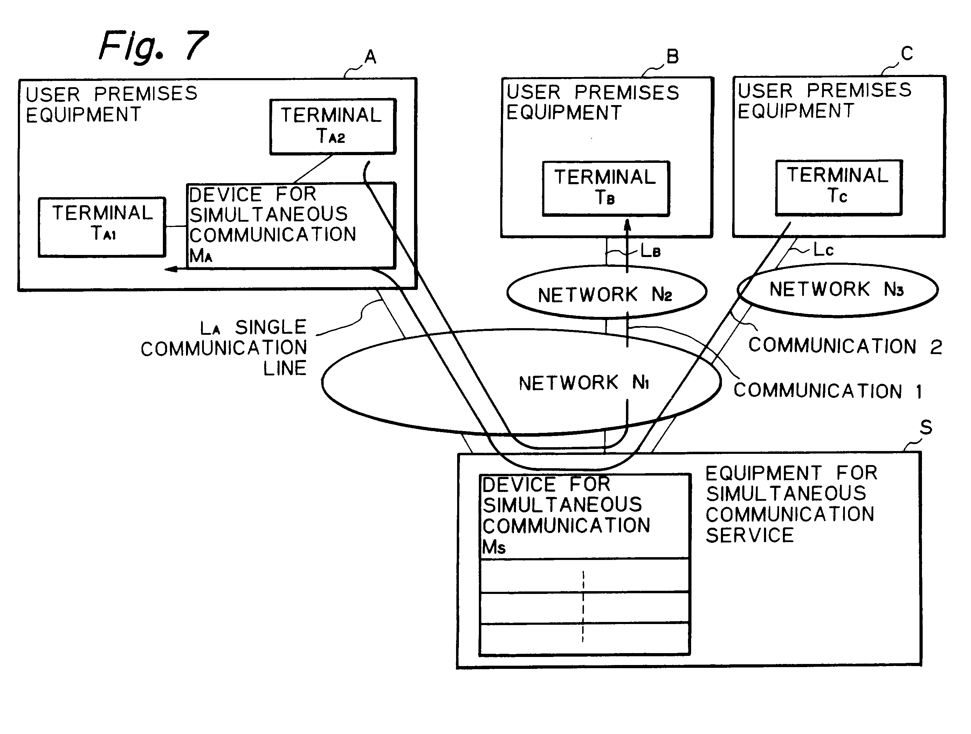

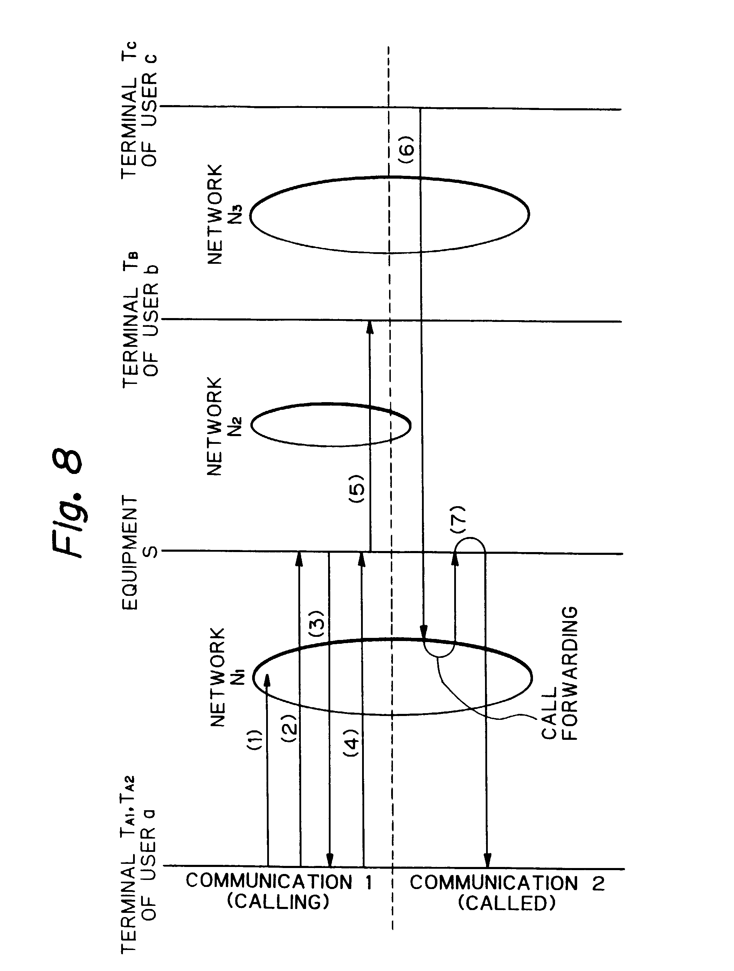

Fig. 7 illustrates an operation of a simultaneous communication of the calling user premises equipment A with the user premises equipment B and of the called user premises equipment A with the user premises equipment C, and Fig. 8 shows an access sequence diagram of the operation of Fig. 7.

The operations in the registration of forwarding and the communication 1 [(1)-(5)] in this case are the same as these in the case of Figs. 4 and 5.

The communication 2 which is carried out, under the execution of the communication 1, between the called user premises equipment A and the equipment C is now described. This communication 2 is simultaneous communication with the communication 1 and is executed between the called telephone or facsimile terminal T_{A1} not yet communicating in the user premises equipment A and the calling telephone or facsimile terminal T_{C} in the user premises equipment C, by using the user side device for the simultaneous communication M_{A} and the network provider device for the simultaneous communication M_{S} in the equipment S.

(6) The user premises equipment C originates a call directed to the equipment A. This call is transferred to the simultaneous communication service equipment S by the call forwarding service in the network N₁.

(7) The equipment S searches and identifies the directed user premises equipment A to which the user c hopes to communicate, depending upon the received dial-in number information for example, by utilizing information stored in the database of user service profile S₅. Namely, although the user premises equipment C has been dialed the telephone number of the user a, the call forwarding service in the network N₁ sends a dial-in number assigned to the user a as a call forwarded number to the equipment S. In other words, the equipment S has subscribed in the dial-in service and has assigned the dial-in number to the user a, and the user premises equipment A has been registered so that all possible calls toward itself from another users are forwarded to that dial-in number. As a result, the equipment S can identify the equipment A depending upon the dial-in number information attached with the forwarded call from the network N₁.

The aforementioned protocol of (1)-(4) and (6) and (7) is a mere example and does not limit the present invention. To realize the present invention in fact, various modifications of the protocol may be executed and these modifications are within the scope of the present invention.

Various methods can be used for identifying the user premises equipment A other than the method for utilizing the dial-in information. For example, the equipment A can be identified from the notified number information by using a notification function which is a function in the call forwarding service to notify a call forwarding line identification corresponding to the call forwarding equipment (user premises equipment A) to the call forwarded equipment (simultaneous communication service equipment S). In this case, however, it is necessary to store database of each user premises equipment and its terminal number associating with each other in the equipment S. The equipment A can be also identified from a called terminal number directed to this equipment A, which can be directly obtained by utilizing a call control information in the network, such as No. 7 signal information, in case the equipment S is mounted within the network.

Then, the equipment S checks the current communication state of the searched user premises equipment A. If the equipment A is communicating with the equipment S, the equipment S notifies the incoming call to the equipment A from the equipment C to this equipment A via the communication line now communicating with the equipment S. It is to be noted that this sequence is executed only when the equipment A is now communicating with the equipment S. When the equipment A is being called or when the equipment A is busy due to the communication with a party other than the equipment S, the equipment C is informed it from the equipment S by means of an announce or a tone signal.

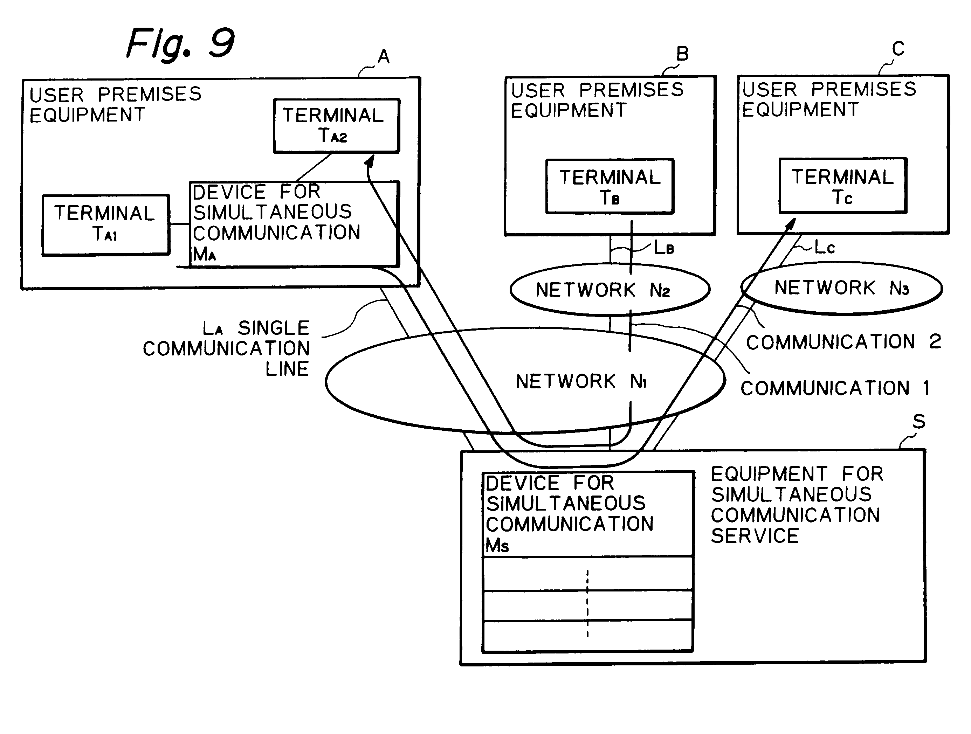

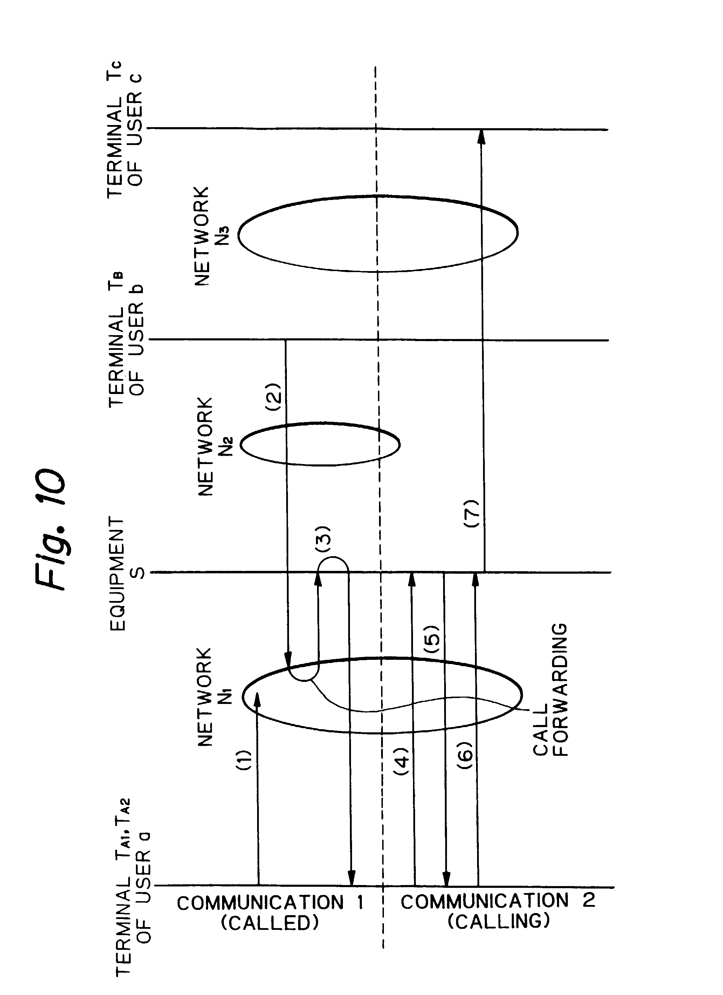

Fig. 9 illustrates an operation of a simultaneous communication of the called user premises equipment A with the user premises equipment B and the calling user premises equipment A with the user premises equipment C, and Fig. 10 shows an access sequence diagram of the operation of Fig. 9.

First, the communication 1 between the called user premises equipment A and the equipment B is described. This communication 1 is executed between the calling data communication terminal T_{B} for personal computer communication in the user premises equipment B and the called data communication terminal T_{A2} for personal computer communication in the user premises equipment A, by using the network provider device for the simultaneous communication M_{S} in the equipment S and the user side device for the simultaneous communication M_{A}.
(1) As shown in Fig. 9, the user premises equipment A of the user a registers so that all possible calls toward itself from the equipment B or C or from another user are forwarded to the simultaneous communication service equipment S by utilizing the call forwarding service in the network N₁ or in a private virtual network service. This registration for call forwarding may be automatically carried out by a part of software for executing call origination process for example, or may be carried out by another way. Also, cancellation for the call forwarding may be automatically carried out by a part of software for executing communication termination process when all the communications of the user premises equipment A via the simultaneous communication service equipment S are to be terminated, or may be carried out by another way. For example, the registration for call forwarding / cancellation for call forwarding may be carried out by means of the simultaneous communication service equipment S instead of the user after the user premises equipment A accesses this equipment S.
(2) The user premises equipment B of the user b originates a call directed to the user premises equipment A. This call is forwarded to the simultaneous communication service equipment S by the call forwarding service in the network N₁.
(3) The equipment S searches and identifies the directed user premises equipment A to which the user b hopes to communicate, depending upon the received dial-in number information for example, by utilizing information stored in the database of user service profile S₅. Namely, although the user premises equipment B has been dialed the telephone number of the user a, the call forwarding service in the network N₁ sends a dial-in number assigned to the user a as a call forwarded number to the equipment S. In other words, the equipment S has subscribed in the dial-in service and has assigned the dial-in number to the user a, and the user premises equipment A has been registered so that all possible calls toward itself from another users are forwarded to that dial-in number. As a result, the equipment S can identify the equipment A depending upon the dial-in number information attached with the forwarded call from the network N₁.

Then, the equipment S checks the current communication state of the searched user premises equipment A. It is to be noted that this sequence is executed only when the equipment A is not communicating with the equipment S. If the equipment A is not under communication, the equipment S originates a call to the equipment A so that the call from the equipment B is arrived at this equipment A. A function for notifying to the equipment A that this arrival of the call is via the equipment S may be provided in this equipment S. However, such incoming call notification function may not be necessarily provided. The notification may contain cancellation for call forwarding to the equipment S in the network N₁ by the equipment A. When the equipment A is being called or when the equipment A is busy due to the communication with a party other than the equipment S, the user premises equipment B is informed it from the equipment S by means of an announce or a tone signal.

The protocol in the communication 2 (4)-(7) between the calling user premises equipment A and the called user premises equipment C under the communication 1 in this case is the same as the protocol (6)-(9) in the case of Figs. 4 and 5.

The aforementioned protocol of (4)-(6) is a mere example and does not limit the present invention. To realize the present invention in fact, various modifications of the protocol may be executed and these modifications are within the scope of the present invention.

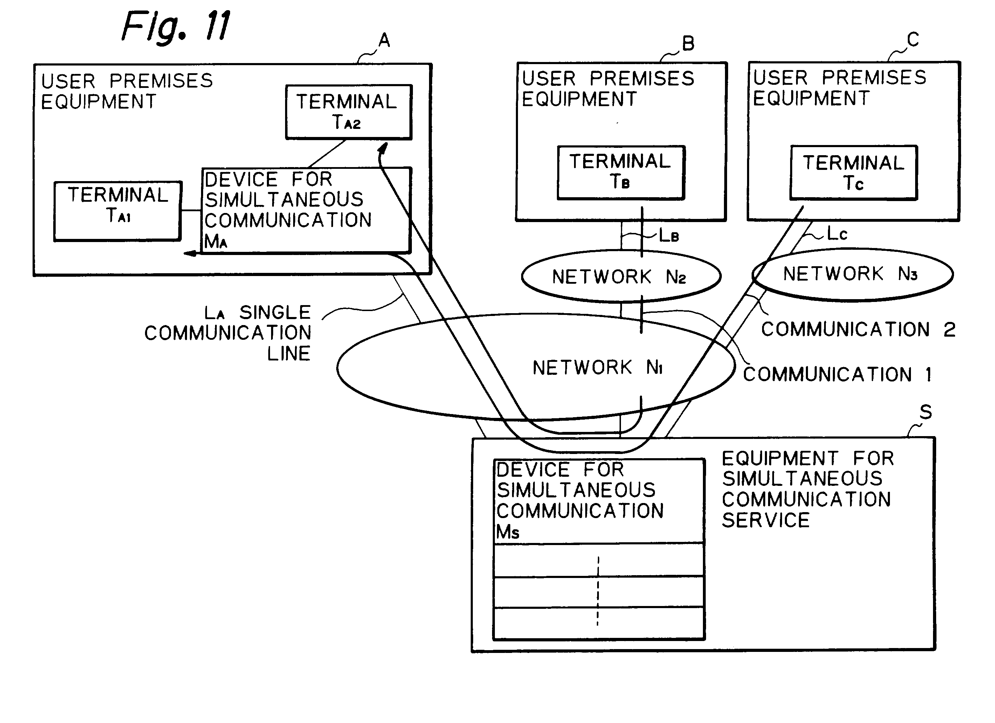

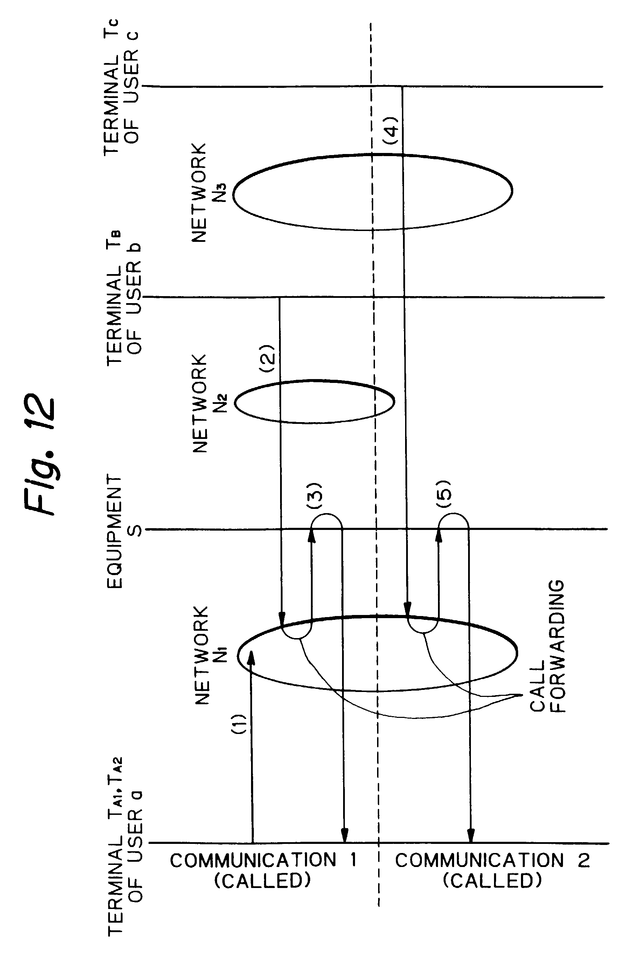

Fig. 11 illustrates an operation of a simultaneous communication of the user premises equipment A with both the user premises equipments B and C, and Fig. 12 shows an access sequence diagram of the operation of Fig. 11. In this case, calls to the equipment A are originated from the equipments B and C.

The registration for call forwarding and the protocol in the communication 1 (1)-(3) are the quite same as these in the case of Figs. 9 and 10, and the protocol in the communication 2 (4)-(5) between the called user premises equipment A and the calling user premises equipment C under the communication 1 in this case is also the same as the protocol (6)-(7) in the case of Figs. 7 and 8.

As will be understood from the above description, even when a user connected with the network by a single communication line is now executing data communication with one party, this user can simultaneously originate or receive a call for a telephone or a facsimile communication with another party. Similar to this, even when the user is now executing a telephone or a facsimile communication with one party, this user can simultaneously originate or receive a call for data communication with another party. Namely, the user can individually execute two communications with different parties via only a single communication line. Particularly, this multiparty simultaneous voice and data communication service can be obtained only by preparing, at one user side, a simultaneous communication device provided with the multiplexing function (for example a DSVD modem) or a simultaneous communication device (a data communication device) having a protocol capable of simultaneously operating different communication applications connected to a modem provided with no multiplexing function. No modification nor addition of the user premises equipment and the line subscription except for preparing the above-mentioned simultaneous communication device is necessary. Accordingly, two-site simultaneous and individual communication can be realized by a single communication line with a low initial cost.

In the aforementioned embodiment, the user premises equipment A is provided with a telephone terminal such as a typical telephone or a facsimile and a data communication terminal such as a personal computer communication terminal so that coded voice information and data communication information are simultaneously communicated between these different terminals in this equipment A and two different parties, respectively. However, according to the present invention, the user premises equipment A may configurated such that different data communication information are simultaneously communicated between two data communication terminals in the equipment A and two different parties, respectively, or such that different voice information are simultaneously communicated between two typical telephone terminals in the equipment A and two different parties, respectively.

Also, in the embodiment, the user premises equipment A is connected with the network N₁ by means of an analog telephone line. However, these are connected with each other by a communication line with a plurality of channels which can simultaneously communicate such as the ISDN line, resulting the number of parties capable of simultaneously communicating to increase.

Even when the ISDN line is used, problems occurs when all the B channels of the ISDN line are utilized to one communication line as for 128 kbps (ISDN 2B) bulk data transfer. However, according to the present invention, such problems can be easily solved as well as problems occurred in case of using a single analog telephone line.

In modifications, the communication line may be a mobile phone line such as for PHS or portable telephone which can execute data communication of 32 kbps.

Many widely different embodiments of the present invention may be constructed without departing from the spirit and scope of the present invention. It should be understood that the present invention is not limited to the specific embodiments described in the specification, except as defined in the appended claims.

## Claims

1. A multiparty simultaneous communication system including at least one first user premises equipment and second and third user premises equipments, said first user premises equipment being connectable with said second and third user premises equipments via a network to which said first user premises equipment is subscribed, said system comprising:
a first simultaneous communication device, mounted in said first user premises equipment, capable of simultaneously communicating two kinds of information via a single communication line;
means for simultaneous communication service located inside or outside of said network; and
at least one second simultaneous communication device, mounted in said means for simultaneous communication service, capable of simultaneously communicating two kinds of information via a single communication line,
said means for simultaneous communication service controlling said at least one second simultaneous communication device connected to said first simultaneous communication device via a single communication line so that said first user premises equipment can simultaneously communicate with said second and third user premises equipments.

2. A system as claimed in claim 1, wherein said system includes a plurality of the first user premises equipments, and wherein said means for simultaneous communication service has a plurality of the second simultaneous communication devices corresponding to the respective first user premises equipments.

3. A system as claimed in claim 1 or claim 2, wherein the system has a function of registration for call forwarding so that all connection requirements directed to said first user premises equipment are transferred to said means for simultaneous communication service.

4. A system as claimed in claim 3, wherein said means for simultaneous communication service has a function for identifying said first user premises equipment by utilizing a dial-in function of the network when said first user premises equipment receives the connection requirement.

5. A system as claimed in claim 3, wherein said means for simultaneous communication service has a function for identifying said first user premises equipment by utilizing a call forwarding line identification of a call forwarding function when said first user premises equipment receives the connection requirement.

6. A system as claimed in claim 3, wherein said means for simultaneous communication service has a function for identifying said first user premises equipment by utilizing a call control information in the network when said first user premises equipment receives the connection requirement.

7. A system as claimed in any of the preceding claims, wherein said first and second simultaneous communication devices are devices provided with a multiplexing function.

8. A system as claimed in any of the preceding claims, wherein each of said first and second simultaneous communication devices includes a modem provided with no multiplexing function, and a data communication device connected to said modem, having a protocol capable of simultaneously operating different communication applications.

9. A system as claimed in any of the preceding claims, wherein said first and second simultaneous communication devices are connected with each other via a single analog telephone line.

10. A system as claimed in any of claims 1 to 8, wherein said first and second simultaneous communication devices are connected with each other via an ISDN line.

11. A system as claimed in any of claims 1 to 8,wherein said first and second simultaneous communication devices are connected with each other via a mobile phone line.
